# EUROPEAN PATENT APPLICATION

(11) **EP 4 807 626 A1**
(43) Date of publication of application: **16.09.2026**
(21) Application number: 26164133.6
(22) Date of filing: 11.03.2026
(51) Int. Cl.: G06N 3/0475, G06N 3/065

(54) **ANALOG SYSTEMS AND METHODS FOR HARDWARE ACCELERATION IN LARGE LANGUAGE MODEL AUDIO PROCESSING**

(30) Priority: 11.03.2025 US 202563769867 P
(71) Applicant: Blumind Inc., Ottawa, ON K1G 1M1 (CA)
(72) Inventor: Levinson, Roger, Ottawa, K1G 1M1 (CA); Mathur, Niraj, Ottawa, K1G 1M1 (CA); Gosson, John, Ottawa, K1G 1M1 (CA)
(74) Representative: Humphrey-Evans, Edward John

(57) **Abstract**

Analog systems and methods for hardware acceleration in large language model audio processing for tasks such as real-time translation, voice assistants and audio analysis are provided. The systems and methods include a core processing unit comprising a plurality of neurons, each neuron comprising at least one synapse, each synapse comprising a programmable charge-trapped transistor for storing synaptic weight and a local activation memory. A local activation router operably coupled to the core processing unit and the local activation memory is configured to route input activations to one or more synapses. The described systems and methods keep user data private by performing LLM inference on the edge device itself, without relying on the cloud.

## Description

### Technical Field

The embodiments disclosed herein relate to large language models, and, in particular to all-analog systems and methods to accelerate audio processing by large language models.

### Introduction

Large language models (LLMs) are used for audio processing in a number of applications and devices, for example, smart speakers and hearable devices. Traditional LLMs are hampered by several challenges.

Processing in cloud-based LLMs introduces latency, hindering real-time interactions in applications like smart speakers and voice assistants. Sending audio data to the cloud also raises privacy concerns for users. Traditional LLM processors can be power-hungry, limiting battery life in edge devices like hearables and wearables. In addition, general-purpose processors may not be optimized for the specific demands of audio LLMs limiting performance.

Accordingly, there is a need for systems and methods with ultra-low latency, low-power and on-device processing for audio LLM applications.

### Summary

Provided are all-analog systems and methods for providing hardware acceleration in LLMs for audio processing. The embodiments described process audio data directly on an edge device enabling real-time interactions and responsiveness with ultra-low latency and low power consumption ideal for battery-powered devices.

The described systems and methods keep user data private by performing LLM inference on the edge device itself, without relying on the cloud. The system architecture is customizable to optimize processing for audio LLM tasks such as real-time translation, voice assistants and audio analysis.

According to some embodiments, there is an analog neural processing unit (NPU). The NPU includes a core processing unit comprising a plurality of neurons, each neuron comprising at least one synapse, each synapse comprising a programmable charge-trapped transistor for storing synaptic weight. The NPU further includes a local activation memory and a local activation router operably coupled to the core processing unit and the local activation memory. The local activation memory may be an ephemeral memory structure or SRAM.

The local activation router is configured to asynchronously receive and transmit the input activations and route input activations to one or more synapses. In some embodiments, the input activations are received from the local activation memory. In other embodiments, the input activations are received from an external source such as a data input source or a second neural processing unit.

According to another embodiment, there is a network enabled NPU. The network enabled NPU includes a core neural processing unit, an external activation memory and an external activation router arranged in a 2D array. The external router is configured to route input activations from an external source to the core neural processing unit and route output activations from the core neural processing unit to an external target. The external target may be a second neural processing unit.

According to another embodiment there is a temporal unary network comprising a plurality of the network-enabled analog neural processing units, wherein each network-enabled analog neural processing unit is operably connected to at least one other network-enabled analog neural processing unit.

According to other embodiments there is a large language model (LLM) comprising either NPUs or network enabled-NPUs.

According to another embodiment, there is provided a hybrid near-memory compute/in-memory compute system comprising: a digital storage for storing a coefficient; a core neural processing unit comprising a plurality of neurons, each neuron comprising at least one synapse, each synapse comprising a plurality of programmable charge-trapped transistors (CTTs), each CTT having a programmable weight and configured to convert a digital bit of the coefficient into an analog current time pulse; an activation router operably coupled to the core processing unit and the digital storage, the activation router configured to: route digital bits from the digital storage to one or more synapses; and an accumulation block configured to accumulate current time pulses output from the plurality of CTTs to provide an analog representation of the coefficient. A number of the CTTs can be equal to a bit width of the coefficient. The bit width of the digital storage can be equal to a bit width of the coefficient.

This embodiment could further comprise a dynamic weight storage connected to the plurality of CTTs, the dynamic weight storage storing programmable weights for the plurality of CTTs. The plurality of CTTs and the digital storage are conveniently in close physical proximity on a chip.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
FIG. 1 is a diagram of an all-analog signal processing path;
FIG. 2A is a diagram of a neural processing unit, according to an embodiment; and
FIG. 2B is a diagram of a network enabled neural processing unit, according to an embodiment;
FIG. 3 is a diagram of temporal unary network, according to an embodiment;
FIG. 4 is a comparison of digital and unary edge transitions to transmit data as a function of bit width;
FIG. 5 is a diagram of a hybrid near-memory compute/in-memory compute system; and
FIG. 6 is energy usage metrics for two LLMs implementing a hybrid analog near-memory compute/in-memory compute system.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud based program or system, laptop, personal data assistance, cellular telephone, smartphone, or tablet device.

Each program is preferably implemented in a high-level procedural or object oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The term "about," or a tilde (~) when preceding a value herein, refers to the usual error range for the respective value readily known to the skilled person in this technical field, for example, a range of ± 10% of the indicated value. For example, ~1.0 means between 0.9 to 1.1.

The terms "processor," "post processor" or "compute unit" as used herein, means a computer processor e.g., a central processing unit (CPU), a graphics processing unit (GPU), an integrated circuit, a system-on-a-chip or a microcontroller unit (MCU), including associated hardware and software, being configured to execute instructions, perform calculations and/or process signals/data as the case may be.

The term "ephemeral memory," as used herein, means the ephemeral memory storage structures described in U.S. Patent Publication No. 20220374698. Ephemeral memory is used to temporarily store/retain information and may operate asynchronously without reference to a system clock.

The term "neural network," as used herein, means a neural network comprising charge-trapped transistors (CTTs) for supplying synaptic weights and configured to process input signals transformed into time pulses as described in U.S. Patent Publication No. 20220374698 and U.S. Patent Publication No. 20230238014.

The terms "neural processing unit" or "NPU," as used herein, means a hardware accelerator for LLMs, including programmable arrays of synapses and neurons which may comprise CTTs.

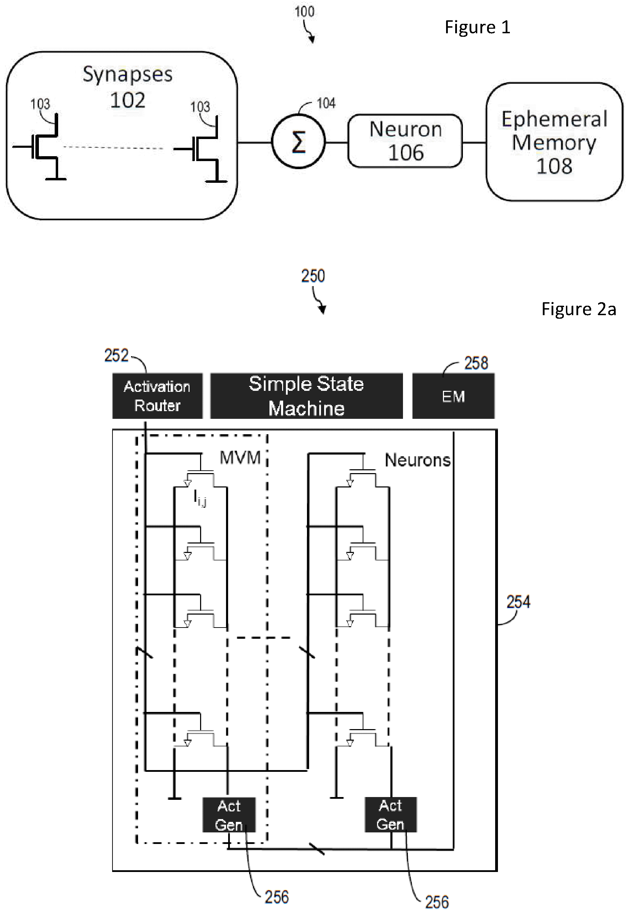

Referring to FIG. 1, illustrated therein is a diagram showing fundamental processing blocks of an all-analog signal processing pathway 100. The all-analog pathway 100 may be configured for analog signal processing (e.g., audio processing, image processing, etc.) and/or for hardware acceleration in LLMs. The all-analog pathway may form part of an analog neural network. The all-analog pathway 100 includes synapses 102, an accumulation block 104, a neuron 106 (e.g., in a layer of the analog neural network) and an ephemeral memory 108.

The synapses 102 each comprise one or more programmable CTTs 103 for storing synaptic weight and configured to produce a quantity of charge equal to the product of an input signal and the synaptic weight as described in U.S. Patent Publication No. 20220374698. The CTT 103 is programmable such that the stored synaptic weight may be dynamically adjusted according to the signal processing application.

The accumulation block 104 is configured for summing the output (charge) from the synapses 102 and activation generation as described in U.S. Patent Publication No. 20220374698. The accumulation block 104 generates an activation pulse proportional to the accumulated charge as an input to the neuron 106.

The neuron 106 is in a layer of an analog neural network of the type described in U.S. Patent Publication No. 20220374698.

The ephemeral memory 108 is an ephemeral memory structure of the type described in U.S. Patent Publication No. 20220374698 for temporarily retaining information (i.e., the signal/activation pulse from the neuron 106) between layers of a neural network prior to processing by a subsequent layer of the neural network.

The all-analog pathway 100 provides several benefits over digital signal processing solutions, not limited to: not requiring a high-speed clock; no digital-to-analog (or analog-to-digital) conversion; lower energy requirements; high stability over various processes, voltage and temperature; direct integration with analog sensor input; and implementing low-cost standard CMOS 32 nm and below process nodes. Some of these benefits are discussed in more detail below.

Data stored in the ephemeral memory 108 is temporarily retained and is then typically passed along a predetermined processing path. By controlling where the data goes from the ephemeral memory 108, it allows for reconfiguration of the neural network architecture. A configurable analog neural network may thus be particularly suited for use as an inference center and/or be reconfigured on the fly for different needs in a manner that is more energy efficient than comparable digital solutions. In addition, a configurable analog neural network can be scaled to compute 100Ms of parameters on the edge, thus making such a configurable analog neural network ideal for LLMs.

Referring to FIG. 2A, shown therein is a diagram of an NPU 250 including a core processing unit 254, local activation storage 258, and local activation router 252, according to an embodiment. The core processing unit 254, local activation storage 258, and local activation router 252 are arranged on a single chip.

The core processing unit 254 includes a plurality of neurons, each neuron comprising at least one synapse and each synapse comprising a programmable CTT for storing synaptic weight. The core processing unit 254 may comprise a simple state machine. The core processing unit 254 includes activation generators 256.

The activation router 252 is configured for temporal unary activation routing in an analog neural network. The activation router 252 is used locally, within the NPU 250 to receive input activations, either from an external source (such as a data input source or another NPU) or from previous computations performed within the NPU 250 and stored in the local activation memory 258, and route them to the computational elements (e.g., an analog neural network) within the core processing unit 254. The activations may be in the format of temporal unary encoding to maximize energy efficiency in the NPU 250.

The local activation memory 258 is operably coupled to the core processing unit 254 and the activation router 522. Preferably the local activation memory 258 comprises an ephemeral memory structure configured to store information in temporal unary format. According to other embodiments, the local activation memory 258 may be SRAM.

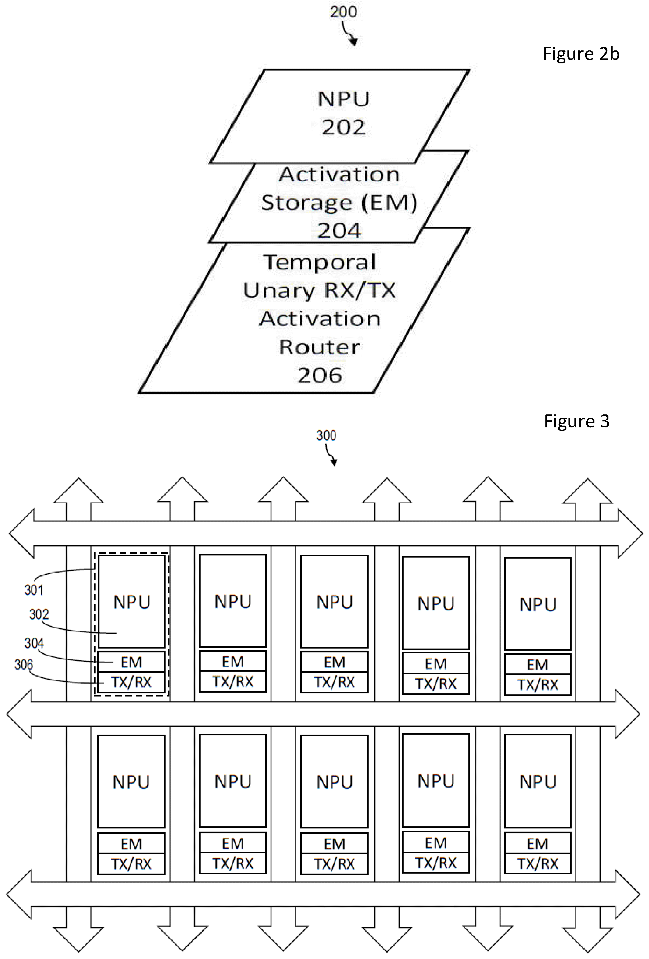

Referring to FIG. 2B shown therein is a diagram of a network enabled NPU 200, according to an embodiment, as well as the means to network connect the NPU to other NPUs or resources in an embodiment. The network enabled NPU 200 includes a core neural processing unit (NPU) 202, which may be embodied as NPU 250, an external activation storage 204, which can be an ephemeral memory structure in which activations can be routed internally to and from the NPU 202 and routed to external targets, such as other NPUs in an array, and a temporal unary RX/TX which functions as an external activation router 206.

The NPU 202 may include an analog neural network comprising programmable charge-trapped transistors (CTTs) for supplying synaptic weights and configured to process input signals transformed into time pulses. The NPU 202 may be configured or configurable for analog signal processing (e.g., audio processing, image processing, etc.) and/or for hardware acceleration in Large Language Models (LLMs).

The activation router 206 is configured to asynchronously receive and transmit temporal unary information. The activation storage 204 may be an ephemeral memory configured for temporal unary activation storage of activation pulses routed by the activation router 206. The activation router 206 in this embodiment contains the necessary resources, such as transmitters, receivers, addressing functions, network management functions, which allows the router to send and receive activations from other elements in a larger system, such as other NPUs.

The NPU 202, the activation storage 204 and the activation router 206 are arranged in a 2D array. This arrayed configuration allows for NPU 200 to be arranged into a network of connected NPUs on a chip through a temporal unary network (TUN) 300 shown in FIG. 3. The temporal unary network 300 includes a plurality of temporal unary blocks (for reference, one temporal unary block 301 is identified), which may each include an NPU 302, EM 304, and activation TX/RX router 306 functions, that are operably connected. The arrayed arrangement of the blocks 301 combined with the ability to stack multiple semiconductor dice with appropriate die to die interconnect enables intra- and inter-die activation routing which minimizes data movement power and provides robust operation across process, voltage and temperature (e.g., >1000 Tera operations per second per watt).

The analog embodiments in FIGS. 2 and 3 provide for lower power consumption compared to digital alternatives. In addition to the higher dynamic power requirements of digital data, digital data must be buffered in unary memory (e.g. activation storage 204) on both sides of the data transmission. This is because the data processing must be done with temporal unary data so the value needs to be converted to and from binary at each end. If the data is transmitted as temporal unary then potential larger power savings can be had by not needing to buffer the data on one or both ends of the transmission.

Another benefit of temporal unary encoding is that it does not require the same level of clock synchronization between the sender and receiver to reliably send data. By reducing the clock synchronization requirements between the sender and receiver one can save additional power and complexity.

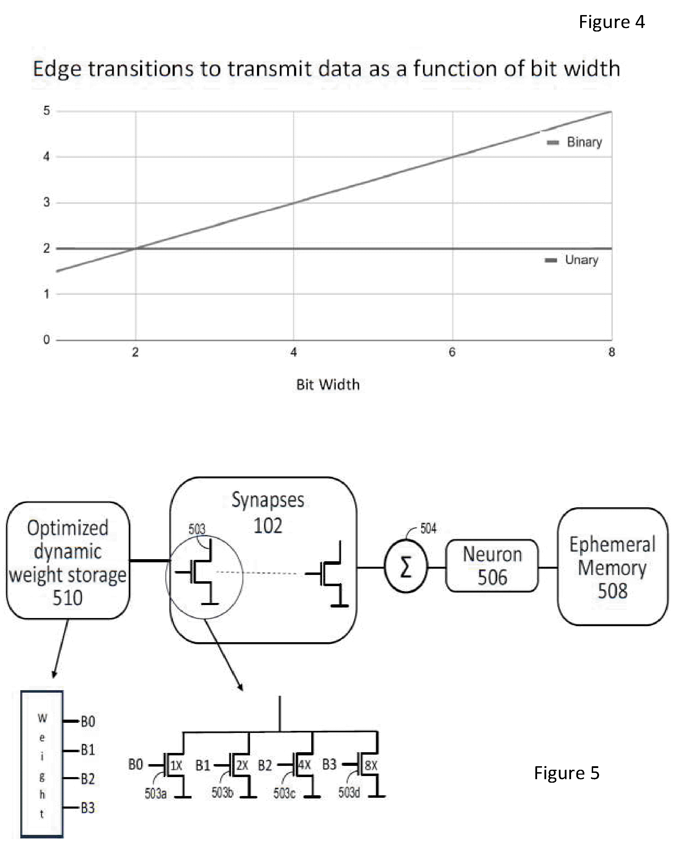

Referring to FIG. 4, shown therein is a comparison of digital (binary) and unary edge transitions to transmit data as a function of bit width. The number of unary transitions to transmit up to 8 bit width of data is constant requiring only two transitions to transmit any bit width of information, whereas the number of digital transitions increases proportionally with increasing bit width. As shown in the diagram as the number of bits of information increases the energy consumption to transmit those bits increases proportionally. To maximize energy efficiency, it is critical that large scale neural networks can minimize the energy overhead of data movement, specifically the computational results from one layer or computational block to the next.

In another embodiment shown in FIG. 5 leverages the all analog pathway shown in FIG. 1 to expand the compute flexibility for use in larger scale solutions. This may be accomplished by CTTs 503 configured as fixed weighted elements which can be combined to create digital-to-analog functionality. This approach would allow for coefficients, in binary format for example, to be applied bit wise to each individually weighted CTT and the summation of the group of weighted CTTs would provide an analog version of a coefficient.

For example, considering a coefficient of 4-bit width, four CTTs 503a, 503b, 503c, 503d (one CTT per bit that is input) having binary weighted weights (e.g.,1, 2, 4, and 8, respectively) convert one bit each to output an analog representation. The coefficient is stored in a highly optimized storage (e.g. SRAM) physically close to the CTTs 503a, 503b, 503c, 503d on a chip providing a hybrid near-memory compute/in-memory compute system as shown in FIG. 5. For each coefficient in the 4-bit example, there would be a 4 bit digital storage, such as SRAM, and 4 binarily weighted CTTs 503. The advantage of this embodiment is that CTTs 503 can be utilized to achieve extremely low current, programmable analog values while the neural network utilizing this core structure can update weights dynamically allowing for much more flexibility in utilizing the embodiment for more generalized compute solutions. While this may use more space on the chip, the realized power savings are orders of magnitude less than current solutions.

More generally, the CTTs 503 can be preprogramed with pre-known values (not limited to binary values) and the coefficients stored in dynamic weight storage 510 are mapped to these known values. The dynamic weight storage 510 may include standard SRAM bits. This provides for flexibility and scaling when applied to larger neural networks such as transformers which may be used to implement LLMs.

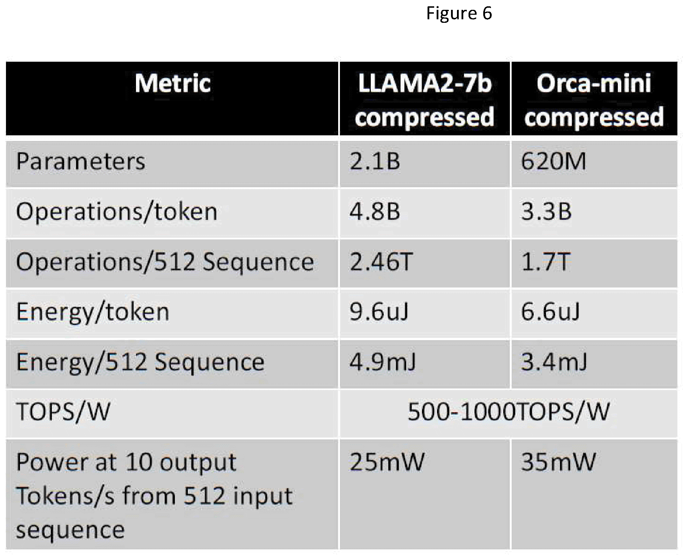

Referring to FIG. 6, shown therein is a table summarizing energy usage metrics for two LLMs implementing an analog hybrid near-memory compute/in-memory compute system as shown in FIG. 5. Compared to existing solutions, the hybrid near-memory compute/in-memory compute system implements the LLMs using orders of magnitude less power.

While the above description provides examples of one or more apparatus, methods, or systems, it will be appreciated that other apparatus, methods, or systems may be within the scope of the claims as interpreted by one of skill in the art.

## Claims

1. An analog neural processing unit (250) comprising:
a core processing unit (254) comprising a plurality of neurons, each neuron comprising at least one synapse (102), each synapse comprising a programmable charge-trapped transistor (103) for storing synaptic weight;
a local activation memory (258); and
a local activation router (252) operably coupled to the core processing unit and the local activation memory, the local activation router configured to:
route input activations to one or more synapses (102).

2. The analog neural processing unit of claim 1, wherein the local activation memory (258) comprises one of: an ephemeral memory structure (108) and SRAM.

3. The analog neural processing unit of claim 1, wherein the input activations are received from the local activation memory (258).

4. The analog neural processing unit of claim 1, wherein the input activations are received from an external source.

5. The analog neural processing unit of claim 4, wherein the external source is one of: a data input source and a second neural processing unit.

6. The analog neural processing unit of claim 1, wherein the local activation router (252) is configured to asynchronously receive and transmit the input activations.

7. The analog neural network of claim 1, wherein the input activations are in temporal unary format.

8. A large language model (LLM) comprising the analog neural processing unit of any one of claims 1 to 7.

9. A network-enabled analog neural processing unit (200) comprising:
a core neural processing unit ( 202, 250) comprising a plurality of neurons, each neuron comprising at least one synapse (102), each synapse comprising a programmable charge-trapped transistor (103) for storing synaptic weight;
an external activation memory (204); and
an external activation router (206) operably coupled to the core neural processing unit and the external activation memory, the external activation router configured to:
route input activations from an external source to the core neural processing unit; and
route output activations from the core neural processing unit to an external target.

10. The network-enabled neural processing unit of claim 9, wherein the core neural processing unit further comprises:
a local activation memory (258); and
a local activation router (252) operably coupled to the core neural processing unit and the local activation memory, the local activation router configured to:
route local input activations from the local activation memory to one or more synapses.

11. The network-enabled analog neural processing unit of claim 9, wherein the external source is one of: a data input source and a second core neural processing unit.

12. The network-enabled analog neural processing unit of claim 9, wherein the external target is a second core neural processing unit.

13. The network-enabled analog neural processing unit of claim 9, wherein the core neural processing unit (202, 250), the external activation memory (204) and the external activation router (206) are arranged in a 2D array.

14. A temporal unary network (300) comprising a plurality of the network-enabled analog neural processing units (200, 301) of claim 10, wherein each network-enabled analog neural processing unit is operably connected to at least one other network-enabled analog neural processing unit.

15. A large language model (LLM) comprising the network-enabled analog neural processing unit of any one of claims 10 to 14.
